# EUROPEAN PATENT APPLICATION

(11) **EP 4 712 495 A1**
(43) Date of publication of application: **18.03.2026**
(21) Application number: 25153744.5
(22) Date of filing: 24.01.2025
(51) Int. Cl.: H04N 23/51, G03B 17/00, G08B 13/00, H04N 7/18

(54) **SURVEILLANCE CAMERA**

(30) Priority: 16.09.2024 US 202463694921 P; 06.12.2024 TW 113147496
(71) Applicant: Moxa Inc., New Taipei City 242 (TW)
(72) Inventor: Weng, Chen-Cheng, 242 New Taipei City (TW); Huang, Yi-Chun, 242 New Taipei City (TW)
(74) Representative: Straus, Alexander

(57) **Abstract**

A surveillance camera(1,1',1") includes a shell body(11,11',11"), an image capturing device(12,12") at least partially disposed inside the shell body(11,11',11") and movable at least along a first direction(D1) or a second direction(D2) opposite to the first direction(D1), and a locking device(13,13") disposed between the shell body(11,11',11") and the image capturing device(12,12"). The locking device(13,13") includes an operating component(131,131',131") rotatably disposed between the shell body(11,11',11") and the image capturing device(12,12") and switchable between a locking position(K1) and unlocking position(K2), and when the operating component(131,131',131") moves from the locking position(K1) to the locking position(K1), the image capturing device(12,12") moves along a first direction(D1), such that the image capturing device(12,12") and the locking device(13,13") engage with the locking device(13,13") and the shell body(11,11',11") in tight-fitting engagements, respectively, thereby locking an orientation of the image capturing device(12,12").

## Description

### Field of the Invention

The present invention relates to a surveillance camera according to the pre-characterizing clause of claim 1.

### Background of the Invention

To meet different shooting requirements, a surveillance camera is usually equipped with an adjusting mechanism to adjust an orientation of an imaging device for adjusting a shooting angle. However, such adjusting mechanism requires an auxiliary tool, such as a screwdriver, during an adjustment operation, which is inconvenient. Moreover, the falling tools or loose parts may cause damage to objects and/or injuries to personnel.

### Summary of the Invention

This is mind, the present invention aims at providing a surveillance camera capable of adjusting a shooting angle without a need of any auxiliary tool.

This is achieved by a surveillance camera according to claim 1. The dependent claims pertain to corresponding further developments and improvements.

As will be seen more clearly from the detail description following below, the claimed surveillance camera includes a shell body, an image capturing device, and a locking device. The image capturing device is at least partially disposed inside the shell body. The image capturing device is movable at least along a first direction or a second direction opposite to the first direction. The locking device is disposed between the shell body and the image capturing device. The locking device includes an operating component rotatably disposed between the shell body and the image capturing device and switchable between a locking position and unlocking position, and when the operating component moves from the locking position to the locking position, the image capturing device moves along a first direction, such that the image capturing device and the locking device engage with the locking device and the shell body in tight-fitting engagements, respectively, thereby locking an orientation of the image capturing device.

In summary, the present invention allows a user to unlock the orientation of the image capturing device by operating the operating component from the locking position to the unlocking position for an adjustment of a shooting angle of the surveillance camera, and the present invention allows the user to lock the orientation of the image capturing device by operating the operating component from the unlocking position to the locking position after the adjustment of the shooting angle of the surveillance camera. The aforementioned operation is tool-free. Therefore, the present invention not only simplifies usage but also enhances user experience.

### Brief Description of the Drawings

In the following, the invention is further illustrated by way of example, taking reference to the accompanying drawings. Thereof:
FIG. 1 and FIG. 2 are schematic diagrams of a surveillance camera at different views according to a first embodiment of the present invention,
FIG. 3 is a partial diagram of the surveillance camera according to the first embodiment of the present invention,
FIG. 4 is a partial sectional diagram of the surveillance camera according to the first embodiment of the present invention,
FIG. 5 and FIG. 6 are partial exploded diagrams of the surveillance camera according at different views according to the first embodiment of the present invention,
FIG. 7 is a front view diagram of the surveillance camera with a locking device in a locking state according to the first embodiment of the present invention,
FIG. 8 is a lateral view diagram of the surveillance camera with the locking device in the locking state according to the first embodiment of the present invention,
FIG. 9 is a front view diagram of the surveillance camera with the locking device in an unlocking state according to the first embodiment of the present invention,
FIG. 10 is a lateral view diagram of the surveillance camera with the locking device in the unlocking state according to the first embodiment of the present invention,
FIG. 11 is a partial diagram of a surveillance camera according to a second embodiment of the present invention,
FIG. 12 is a partial sectional diagram of the surveillance camera according to the second embodiment of the present invention,
FIG. 13 and FIG. 14 are partial exploded diagrams of the surveillance camera according to the second embodiment of the present invention,
FIG. 15 is a partial diagram of the surveillance camera with a locking device in a locking state according to the second embodiment of the present invention,
FIG. 16 and FIG. 17 are schematic diagrams of a surveillance camera at different views according to a third embodiment of the present invention,
FIG. 18 is a partial diagram of the surveillance camera according to the third embodiment of the present invention,
FIG. 19 is a partial sectional diagram of the surveillance camera according to the third embodiment of the present invention,
FIG. 20 and FIG. 21 are partial exploded diagrams of the surveillance camera according to the third embodiment of the present invention,
FIG. 22 is a front view diagram of the surveillance camera with a locking device in a locking state according to the third embodiment of the present invention,
FIG. 23 is a lateral view diagram of the surveillance camera with the locking device in the locking state according to the third embodiment of the present invention,
FIG. 24 is a front view diagram of the surveillance camera with the locking device in an unlocking state according to the third embodiment of the present invention, and
FIG. 25 is a lateral view diagram of the surveillance camera with the locking device in the unlocking state according to the third embodiment of the present invention.

### Detailed Description

In the following detailed description of the preferred embodiments, reference is made to the accompanying drawings which form a part hereof, and in which is shown by way of illustration specific embodiments in which the invention may be practiced. In this regard, directional terminology, such as "top", "bottom", "left", "right", "front", "back", etc., is used with reference to the orientation of the Figure(s) being described. The components of the present invention can be positioned in a number of different orientations. As such, the directional terminology is used for purposes of illustration and is in no way limiting. Accordingly, the drawings and descriptions will be regarded as illustrative in nature and not as restrictive. Also, if not specified, the term "connect" is intended to mean either an indirect or direct electrical/mechanical connection. Thus, if a first device is connected to a second device, that connection may be through a direct electrical/mechanical connection, or through an indirect electrical/mechanical connection via other devices and connections.

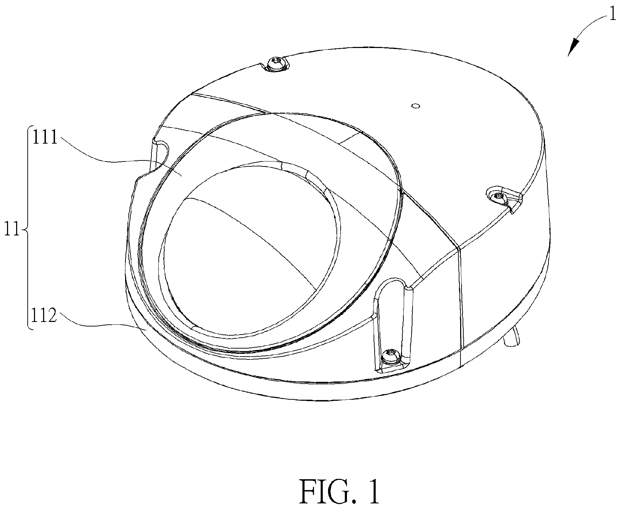

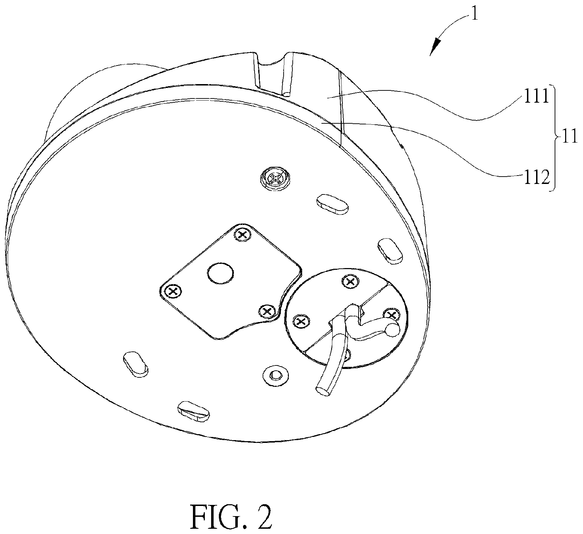

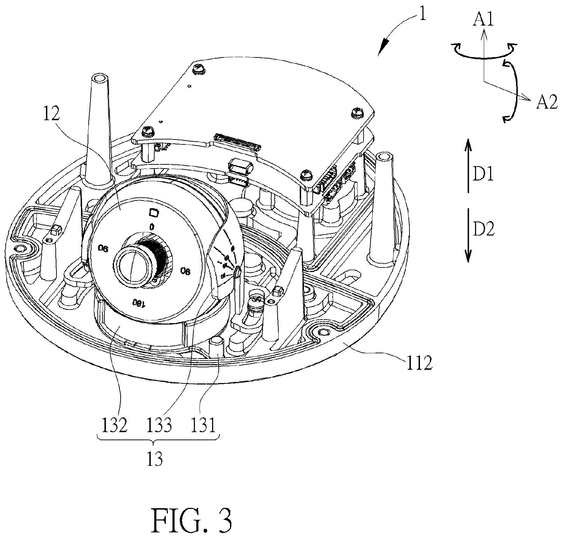

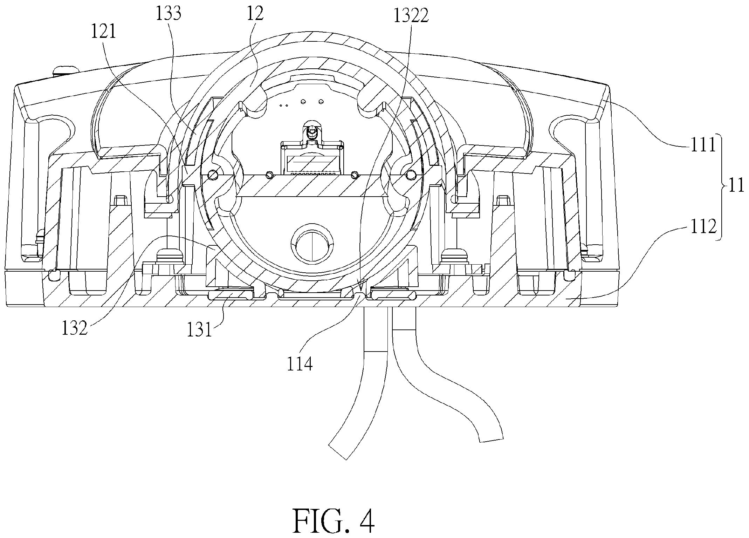

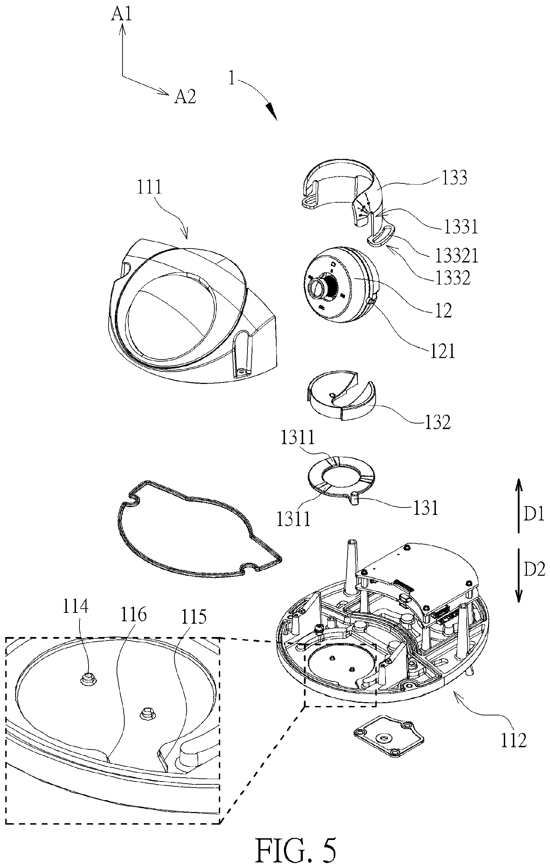

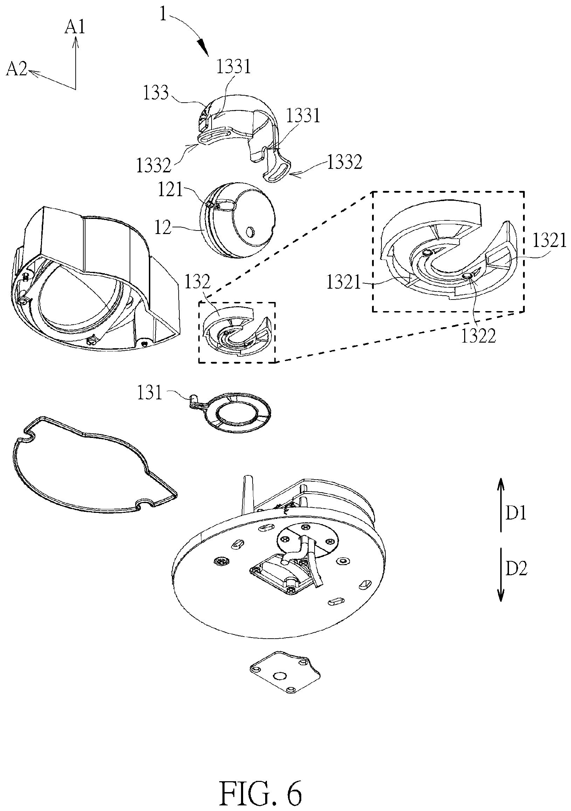

Please refer to FIG. 1 to FIG. 6. FIG. 1 and FIG. 2 are schematic diagrams of a surveillance camera 1 at different views according to a first embodiment of the present invention. FIG. 3 is a partial diagram of the surveillance camera 1 according to the first embodiment of the present invention. FIG. 4 is a partial sectional diagram of the surveillance camera 1 according to the first embodiment of the present invention. FIG. 5 and FIG. 6 are partial exploded diagrams of the surveillance camera 1 according at different views according to the first embodiment of the present invention. As shown in FIG. 1 to FIG .6, the surveillance camera 1 includes a shell body 11, an image capturing device 12 and a locking device 13. The image capturing device 12 is at least partially disposed inside the shell body 11. The locking device 13 is disposed between the shell body 11 and the image capturing device 12. The locking device 13 is switchable between a locking state, which is for restraining an adjustment of an orientation of the image capturing device 12, and an unlocking state, which is for allowing the adjustment of the orientation of the image capturing device 12. Specifically, in order to adjust a shooting angle of the surveillance camera 1 to a desired shooting angle, the locking device 13 can be switched from the locking state to the unlocking state to allow the image capturing device 12 to rotate around a first axis A1 and/or a second axis A2 perpendicular to the first axis A1 for the adjustment of the orientation of the image capturing device 12. After the adjustment of the orientation of the image capturing device 12 is finished, the locking device 13 can be switched from the unlocking state to the locking state to restrain the image capturing device 12 from rotating around both the first axis A1 and the second axis A2, thereby locking the orientation of the image capturing device 12 and positioning the shooting angle of the surveillance camera 1at the desired shooting angle. In this embodiment, the shell body 11 includes an upper case assembly 111 and a base 112, and the image capturing device 12 is an optical imaging or recording device received in an accommodating space between the upper case assembly 111 and the base 112 and having an image sensor and a lens set for capturing images. However, the present invention is not limited to this embodiment. For example, in another embodiment, the image capturing device can be partially exposed out of the upper case assembly.

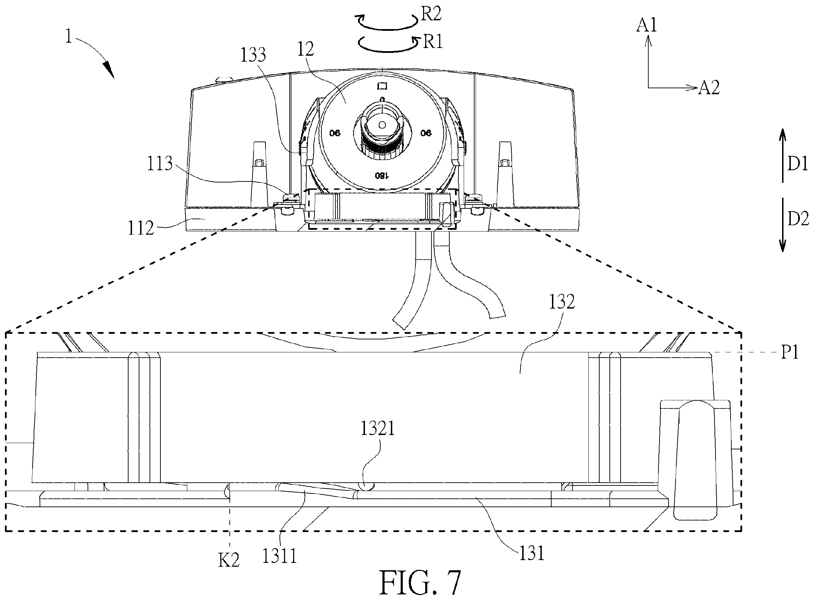

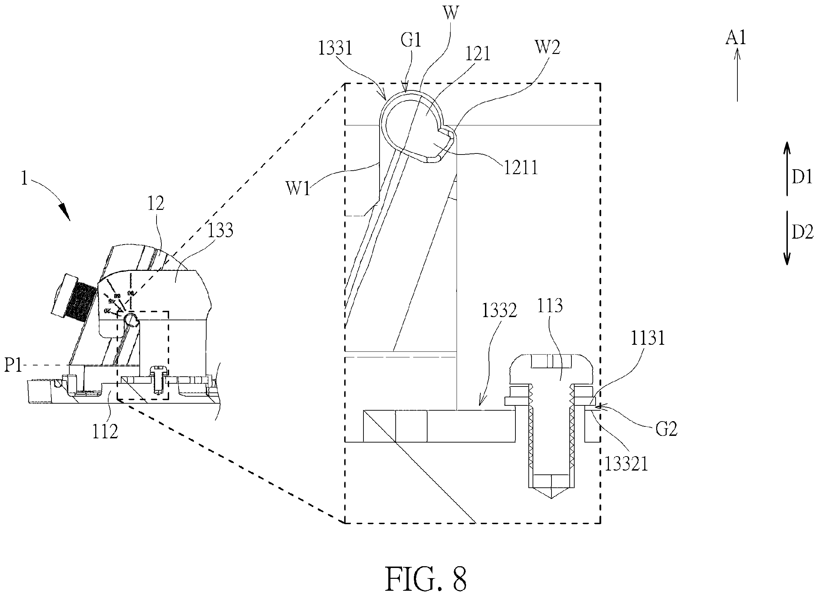

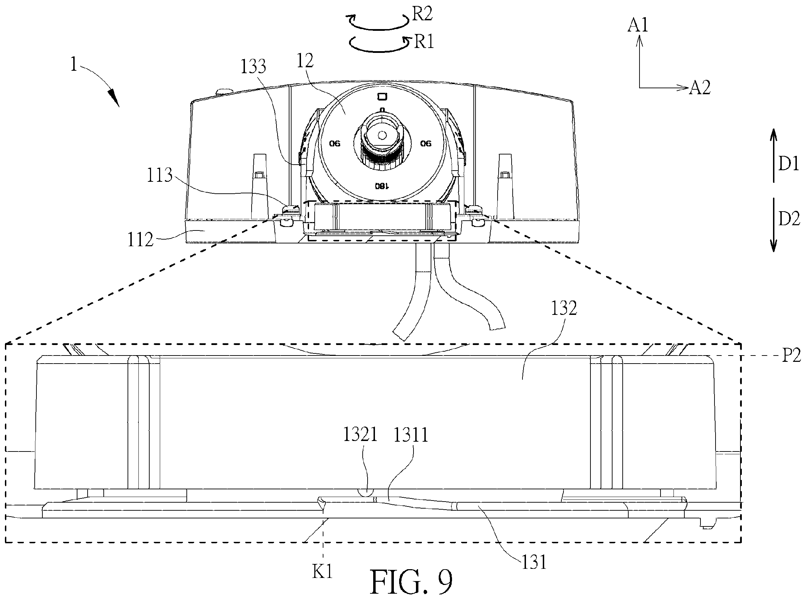

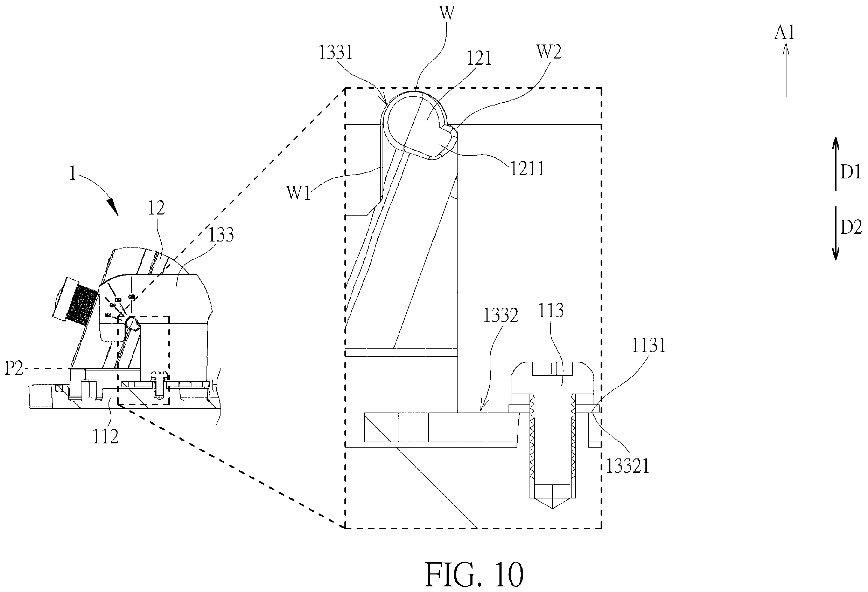

Please refer to FIG. 3 to FIG. 10. FIG. 7 is a front view diagram of the surveillance camera 1 with the locking device 13 in the locking state according to the first embodiment of the present invention. FIG. 8 is a lateral view diagram of the surveillance camera 1 with the locking device 13 in the locking state according to the first embodiment of the present invention. FIG. 9 is a front view diagram of the surveillance camera 1 with the locking device 13 in the unlocking state according to the first embodiment of the present invention. FIG. 10 is a lateral view diagram of the surveillance camera 1 with the locking device 13 in the unlocking state according to the first embodiment of the present invention. As shown in FIG. 3 to FIG. 10, the locking device 13 includes an operating component 131 rotatably disposed on the base 112 of the shell body 11 and the image capturing device 12 and switchable between a locking position K1 (as shown in FIG. 9 and FIG. 10) and an unlocking position K2 (as shown in FIG. 7 and FIG. 8). When the operating component 131 moves from the unlocking position K2 to the locking position K1, the image capturing device 12 moves along a first direction D1, e.g., an upward direction, such that the image capturing device 12 and the locking device 13 engage with the locking device 13 and the shell body 11 in tight-fitting engagements, respectively, thereby locking the orientation of the image capturing device 12. In other words, when the operating component 131 moves from the unlocking position K2 to the locking position K1, the locking device 13 switches from the unlocking state to the locking state. On the other hand, when the operating component 131 moves from the locking position K1 to the unlocking position K2, the image capturing device 12 moves along a second direction D2, which is opposite to the first direction D1, e.g., a downward direction, so as to terminate the tight-fitting engagement of the image capturing device 12 and the locking device 13 and the tight-fitting engagement of the locking device 13 and the shell body 11. In other words, when the operating component 131 moves from the locking position K1 to the unlocking position K2, the locking device 13 switches from the locking state to the unlocking state. In this embodiment, a rotating axis of the operating component 131 is coincided with the first axis A1, and the first direction D1 and the second direction D2 are parallel to an axial direction of the rotating axis of the operating component 131. However, the present invention is not limited to this embodiment.

Besides, as shown in FIG. 3 to FIG. 6, the locking device 13 further includes a supporting component 132 and a bracket 133. The supporting component 132 is disposed between the operating component 131 and the image capturing device 12 and configured to support the image capturing device 12. In other words, the supporting component 132 is located at a side of the operating component 131 away from the base 112 of the shell body 11. The image capturing device 12 is at least partially covered by the bracket 133 and movably engaged between the supporting component 132 and the bracket 133. When the operating component 131 is located at the unlocking position K2, the image capturing device 12 is allowed to rotate around the second axis A2 relative to the bracket 133, and the bracket 133 is allowed to rotate around the first axis A1 relative to the base 112 of the shell body 11. Additionally, when the bracket 133 rotates around the first axis A1 relative to the base 112 of the shell body 11, the bracket 133 can drive the image capturing device 12 to rotate around the first axis A1 together with the bracket 133. In other words, when the operating component 131 is located at the unlocking position K2, the bracket 133 can be rotated around the first axis A1 and/or the image capturing device 12 can be rotated around the second axis A2, so as to adjust the orientation of the image capturing device 12.

Preferably, when the operating component 131 moves from the unlocking position K2 to the locking position K1, the operating component 131 drives the supporting component 132 to move along the first direction D1, such that the supporting component 132 drives the image capturing device 12 to move along the first direction D1. Specifically, as shown in FIG. 3 to FIG. 7 and FIG. 9, at least one driving structure 1311 is formed on the operating component 131. At least one driving cooperating structure 1321 is formed on the supporting component 132. When the operating component 131 moves from the unlocking position K2 to the locking position K1, the operating component 131 drives the supporting component 132 to move along the first direction D 1 by a cooperation of the driving structure 1311 and the driving cooperating structure 1321. On the other hand, when the operating component 131 moves from the locking position K1 to the unlocking position K2, the cooperation of the driving structure 1311 and the driving cooperating structure 1321 enables the supporting component 132 to move along the second direction D2. In this embodiment, the driving structure 1311 can be an inclined surface structure protruding toward the supporting component 132, the driving cooperating structure 1321 can be a protruding structure, such as a protruding rib, configured to abut against the inclined surface structure, and the supporting component 132 can move along the second direction D2 due to gravity when the operating component 131 moves from the locking position K1 to the unlocking position K2. However, the present invention is not limited to this embodiment. For example, in another embodiment, the driving structure and the driving cooperating structure can be a protruding structure, such as a protruding rib, and an inclined surface structure, respectively.

Preferably, when the image capturing device 12 moves along the first direction D1, the image capturing device 12 pushes the bracket 133 to move along the first direction D1. Specifically, as shown in FIG. 3 to FIG. 6, FIG. 8 and FIG. 10, the image capturing device 12 includes at least one engaging structure 121. The bracket 133 includes at least one engaging cooperating structure 1331. The engaging structure 121 is rotatable relative to the engaging cooperating structure 1331 around the second axis A2 and movable relative to the bracket 133 along the first direction D1, such that the image capturing device 12 is rotatable relative to the bracket 133 around the second axis A2 and movable relative to the bracket 133 along the first direction D1. When the operating component 131 moves from the unlocking position K2 to the locking position K1 to drive the image capturing device 12 to move along the first direction D1, the engaging structure 121 pushes the engaging cooperating structure 1331, e.g., a wall W of the engaging cooperating structure 1331, to drive the bracket 133 to move along the first direction D1, such that the engaging structure 121 engages with the engaging cooperating structure 1331 in a tight-fitting engagement. On the other hand, when the operating component 131 moves from the locking position K1 to the unlocking position K2, the image capturing device 12 moves along the second direction D2 to terminate the tight-fitting engagement of the engaging structure 121 and the engaging cooperating structure 1331, e.g., by separating the engaging structure 121 apart from the wall W of the engaging cooperating structure 1331. In this embodiment, the engaging cooperating structure 1331 can be an elongated hole structure extending along the first direction D1, and the engaging structure 121 can be an engaging lug structure movably passing through the elongated hole structure. However, the present invention is not limited to this embodiment. For example, the engaging structure and the engaging cooperating structure can be an elongated hole structure extending along the first direction and an engaging lug structure movably passing through the elongated hole structure, respectively, wherein when the operating component moves from the unlocking position to the locking position, the image capturing device moves along the first direction to drive a lower wall of the engaging structure to push the engaging cooperating structure to drive the bracket to move along the first direction for achieving the tight-fitting engagement of the engaging structure and the engaging cooperating structure, and when the operating component moves from the locking position to the unlocking position, the image capturing device moves along the second direction to terminate the tight-fitting engagement of the engaging structure and the engaging cooperating structure, e.g., by separating the lower wall of the engaging structure apart from the engaging cooperating structure.

Furthermore, the shell body 11 further includes at least one auxiliary component 113 disposed on the base 112. The bracket 133 further includes a moving portion 1332 movably disposed between the base 112 and the auxiliary component 113. When the operating component 131 moves from the unlocking position K2 to the locking position K1, the moving portion 1332 of the bracket 133 moves along the first direction D1, such that the moving portion 1332 of the bracket 133 engages with the auxiliary component 113 in a tight-fitting engagement. Specifically, as shown in FIG. 3 to FIG. 6, FIG. 8 and FIG. 10, an abutting structure 13321 is formed on the moving portion 1332. An abutting cooperating structure 1131 is formed on the auxiliary component 113. When the operating component 131 moves from the unlocking position K2 to the locking position K1, the moving portion 1332 of the bracket 133 moves along the first direction D1 to drive the abutting structure 13321 to tightly attach on the abutting cooperating structure 1131, such that the abutting structure 13321 is engaged with the abutting cooperating structure 1131 in a tight-fitting engagement. On the other hand, when the operating component 131 moves from the locking position K1 to the unlocking position K2, the moving portion 1332 of the bracket 133 moves along the second direction D2 to terminate the tight-fitting engagement of the abutting structure 13321 and the abutting cooperating structure 1131, e.g., by separating the abutting structure 13321 apart from the abutting cooperating structure 1131. In this embodiment, the moving portion 1332 can be a platform whereon an arc-shaped sliding groove is formed, the auxiliary component 113 can be a fastening assembly slidably passing through the arc-shaped sliding groove, and the abutting cooperating structure 1131 and the abutting structure 13321 can be a supporting surface of the fastening assembly and an abutting surface of the platform configured to abut against the supporting surface of the fastening assembly, respectively. However, the present invention is not limited to this embodiment. For example, in another embodiment, the auxiliary component and the moving portion can be two platforms, and the abutting structure and the abutting cooperating structure can be abutting surfaces of the two platforms configured to abut against each other.

Preferably, as shown in FIG. 3 and FIG. 4, at least one guiding structure 114 is formed on the shell body 11. At least one guiding cooperating structure 1322 is formed on the supporting component 132. The guiding structure 114 and the guiding cooperating structure 1322 are configured to cooperate with each other in a sliding manner, such that the supporting component 132 is guided to move along the first direction D1 by a sliding cooperation of the guiding structure 114 and the guiding cooperating structure 1322. In this embodiment, the guiding structure 114 can be a guiding column structure, and the guiding cooperating structure 1322 can be a guiding hole structure configured to slidably cooperate with the guiding column structure. However, the present invention is not limited to this embodiment. For example, in another embodiment, the guiding cooperating structure can be a guiding column structure, and the guiding structure can be a guiding hole structure configured to slidably cooperate with the guiding column structure.

Preferably, as shown in FIG. 3 and FIG. 5, a first stopping structure 115 and a second stopping structure 116 are formed on the shell body 11. The first stopping structure 115 is configured to stop the operating component 131 at the locking position K1 when the operating component 131 rotates from the unlocking position K2 and reaches the locking position K1. The second stopping structure 116 is configured to stop the operating component 131 at the unlocking position K2 when the operating component 131 rotates from the locking position K1 and reaches the unlocking position K2. In this embodiment, the first stopping structure 115 and the second stopping structure 116 can be two walls of a slot structure which is formed on the base 112 of the shell body 11 and configured to at least partially receive the operating component 131. However, the present invention is not limited to this embodiment.

When the operating component 131 is operated by a user to rotate from the unlocking position K2 (as shown in FIG. 7 and FIG. 8) to the locking position K1 (as shown in FIG. 9 and FIG. 10) around the first axis A1 along a first rotating direction R1, e.g., a counterclockwise direction, the driving structure 1311 abuts against the driving cooperating structure 1321 to push the supporting component 132 to move from a first predetermined position P1 (as shown in FIG. 7 and FIG. 8) to a second predetermined position P2 (as shown in FIG. 9 and FIG. 10) along the first direction D1, e.g., the upward direction. When the supporting component 132 moves from the first predetermined position P1 (as shown in FIG. 7 and FIG. 8) to the second predetermined position P2 (as shown in FIG. 9 and FIG. 10) along the first direction D1, the supporting component 132 drives the image capturing device 12 to move along the first direction D1, such that the engaging structure 121 of the image capturing device 12 pushes the wall W of the engaging cooperating structure 1331 of the bracket 133 to drive the bracket 133 to move along the first direction D1, so as to drive the engaging structure 121 of the image capturing device 12 and the abutting structure 13321 of the bracket 133 to tightly attach on the wall W of the engaging cooperating structure 1331 of the bracket 133 and the abutting cooperating structure 1131 of the auxiliary component 113, respectively, to achieve the tight-fitting engagement of the engaging structure 121 and the engaging cooperating structure 1331 and the tight-fitting engagement of the abutting structure 13321 and the abutting cooperating structure 1131. In such a way, the orientation of the image capturing device 12 is locked by a frictional force provided between the engaging structure 121 of the image capturing device 12 and the wall W of the engaging cooperating structure 1331 of the bracket 133 of the locking device 13 and a frictional force provided between the abutting structure 13321 of the bracket 133 of the locking device 13 and the abutting cooperating structure 1131 of the auxiliary component 113 of the shell body 11.

When it is desired to adjust the orientation of the image capturing device 12, the operating component 131 can be operated by the user to rotate from the locking position K1 (as shown in FIG. 9 and FIG. 10) to the unlocking position K2 (as shown in FIG. 7 and FIG. 8) around the first axis A1 along a second rotating direction R2 opposite to the first rotating direction R1, e.g., a clockwise direction, to drive the supporting component 132 to move from the second predetermined position P2 (as shown in FIG. 9 and FIG. 10) to the first predetermined position P1 (as shown in FIG. 7 and FIG. 8) along the second direction D2, e.g., the downward direction, for driving the image capturing device 12 and the bracket 133 to move along the second direction D2 to terminate the tight-fitting engagement of the engaging structure 121 of the image capturing device 12 and the engaging cooperating structure 1331 of the bracket 133 and the tight-fitting engagement of the abutting structure 13321 of the bracket 133 and the abutting cooperating structure 1131 of the auxiliary component 113, e.g., by separating the engaging structure 121 from the wall W of the engaging cooperating structure 1331 by a first distance G1 and separating the abutting structure 13321 from the abutting cooperating structure 1131 by a second distance G2. In such a way, the orientation of the image capturing device 12 is unlocked and can be adjusted by a rotating movement of the bracket 133 relative to the base 112 around the first axis A1 and/or a rotating movement of the image capturing device 12 relative to the bracket 133 around the second axis A2.

Furthermore, as shown in FIG. 8 and FIG. 10, in order to restrict the rotating movement of the image capturing device 12 relative to the bracket 133 within a predetermined range, a positioning block 1211 protrudes from an outer periphery of the engaging structure 121 and configured to abut against a first positioning wall W1 or a second positioning wall W2 of the engaging cooperating structure 1331 for preventing any excessive rotating movement of the image capturing device 12.

Understandably, a relationship of a rotating direction of the operating component 131 and a moving direction of the supporting component 132 is not limited to this embodiment. For example, the supporting component 132 can be driven to move along the first direction D1 and the second direction D2 when the operating component 131 rotates along the clockwise direction and the counterclockwise direction, respectively.

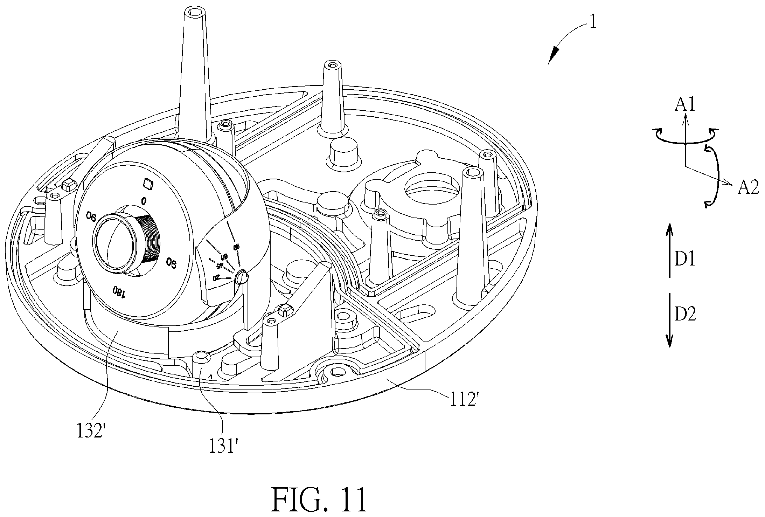

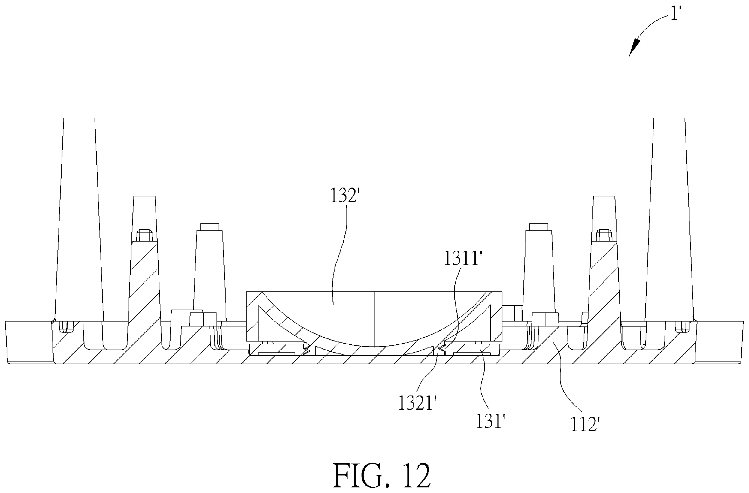

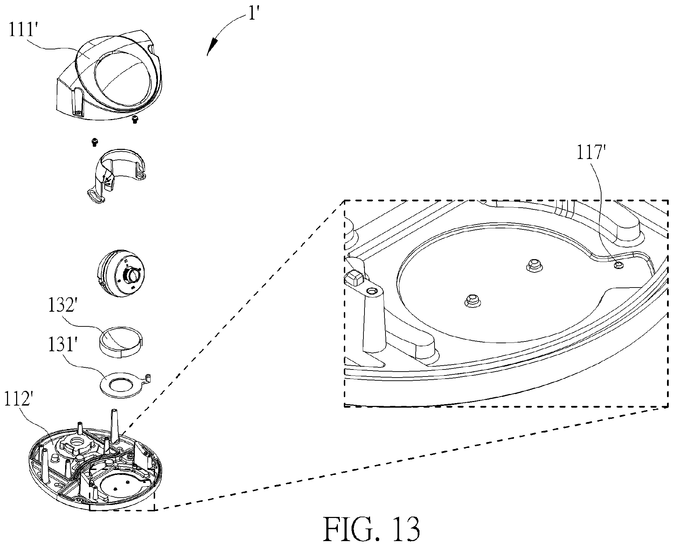

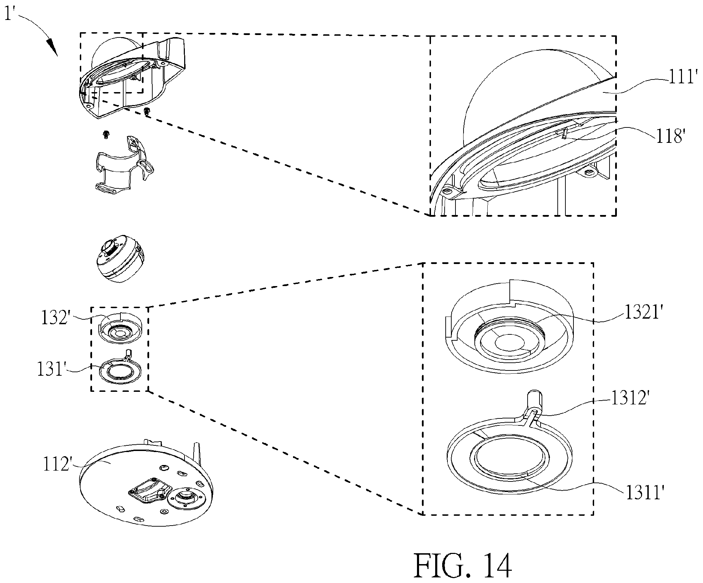

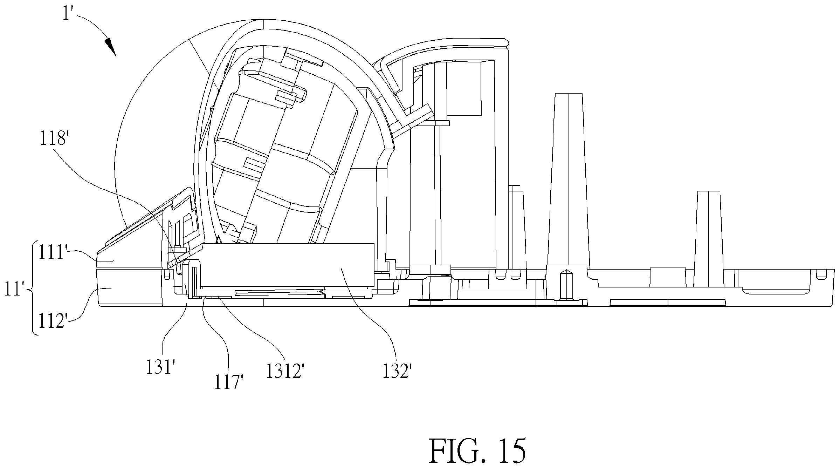

Please further refer to FIG. 11 to FIG. 15. FIG. 11 is a partial diagram of a surveillance camera 1' according to a second embodiment of the present invention. FIG. 12 is a partial sectional diagram of the surveillance camera 1' according to the second embodiment of the present invention. FIG. 13 and FIG. 14 are partial exploded diagrams of the surveillance camera 1' according to the second embodiment of the present invention. FIG. 15 is a partial diagram of the surveillance camera 1' with a locking device 13' in a locking state according to the second embodiment of the present invention. As shown in FIG. 11 to FIG. 15, different from the first embodiment, in this embodiment, a driving structure 1311' formed on an operating component 131' can be an inner threaded structure, and a driving cooperating structure 1321' formed on a supporting component 132' can be an outer threaded structure for achieving the operating component 131' to drive the supporting component 132'. Furthermore, in this embodiment, a positioning structure 117' is formed on a shell body 11' and configured to engage with the operating component 131' to position the operating component 131' at the locking position when the operating component moves from the unlocking position to the locking position. For example, the positioning structure 117' can be a positioning protrusion formed on a base 112' of the shell body 11' and configured to engage with a positioning recessed portion 1312' on the operating component 131'. Besides, in this embodiment, a third stopping structure 118' is further formed on the shell body 11' of the surveillance camera 1' and configured to preventing an unintentional movement of the operating component 131' from the locking position after the operating component 131' moves to the locking position. For example, the third stopping structure 118' can be a stopping rib on an upper case assembly 111' of the shell body 11' and configured to block the operating component 131' for preventing the operating component 131' from rotating from the locking position along the second rotating direction when the upper case assembly 111' is assembled with the base 112'. Additionally, in this embodiment, there is no guiding structure formed on the shell body 11' and no guiding cooperating structure formed on the supporting component 132'. Other structures of this embodiment are identical to the ones of the first embodiment. Detailed description is omitted herein for simplicity.

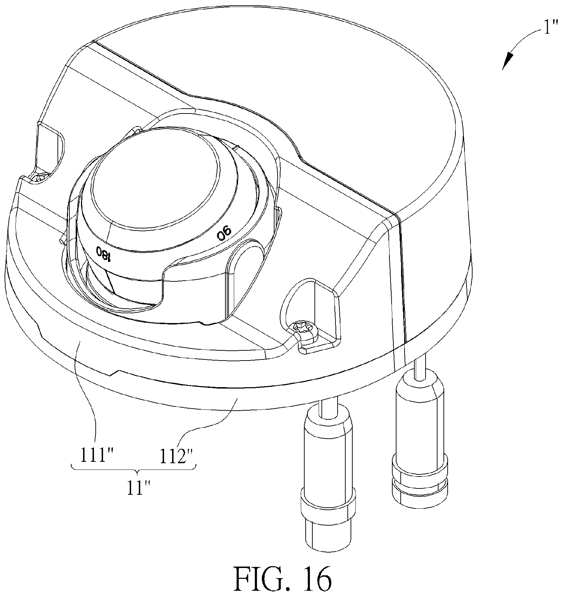

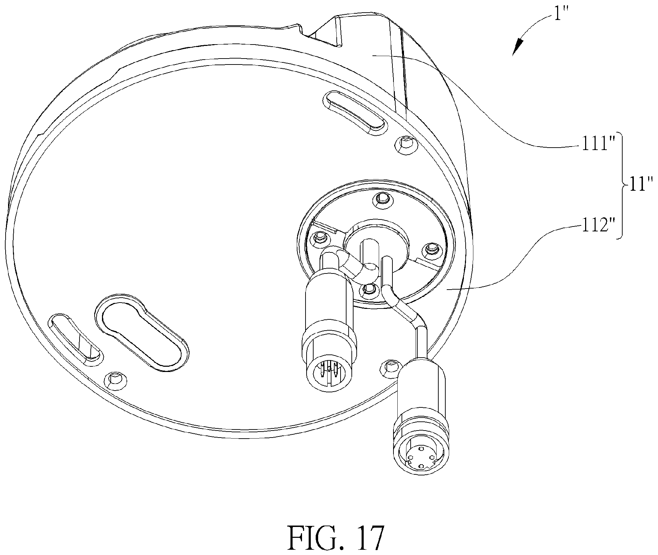

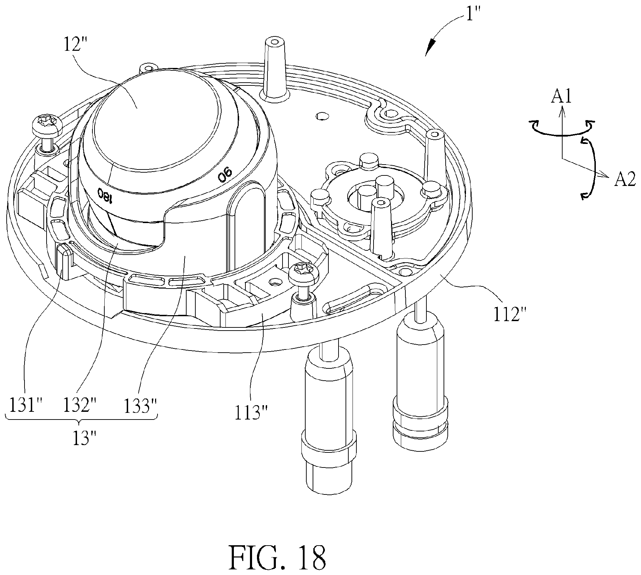

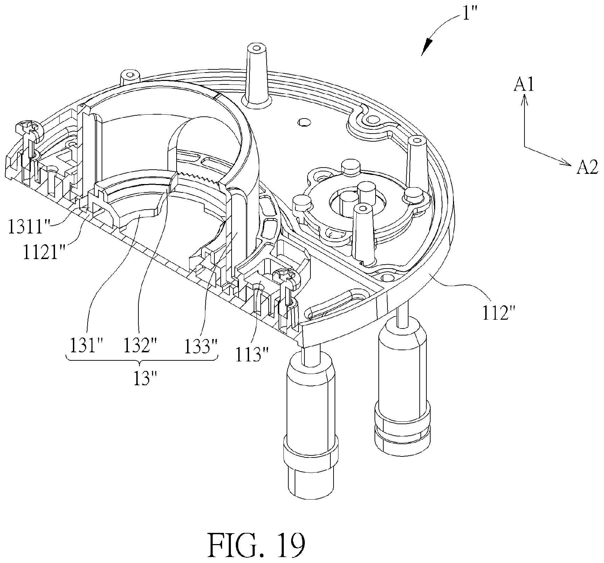

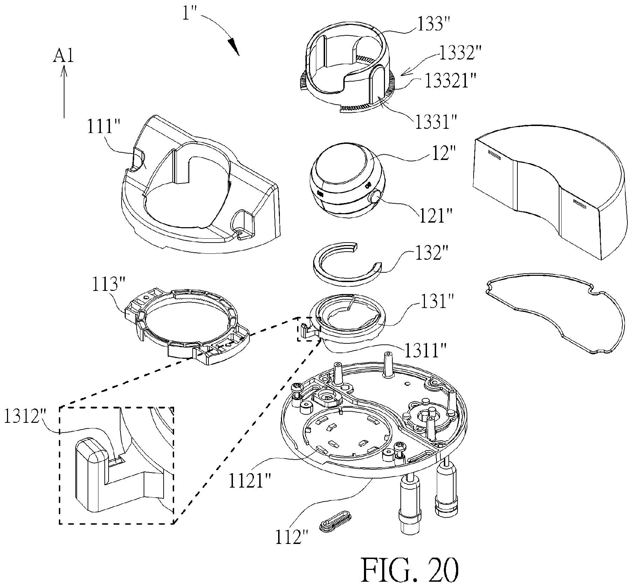

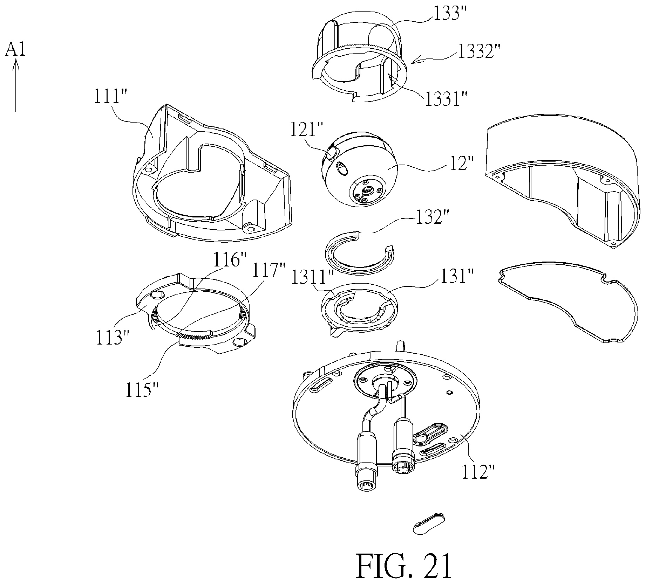

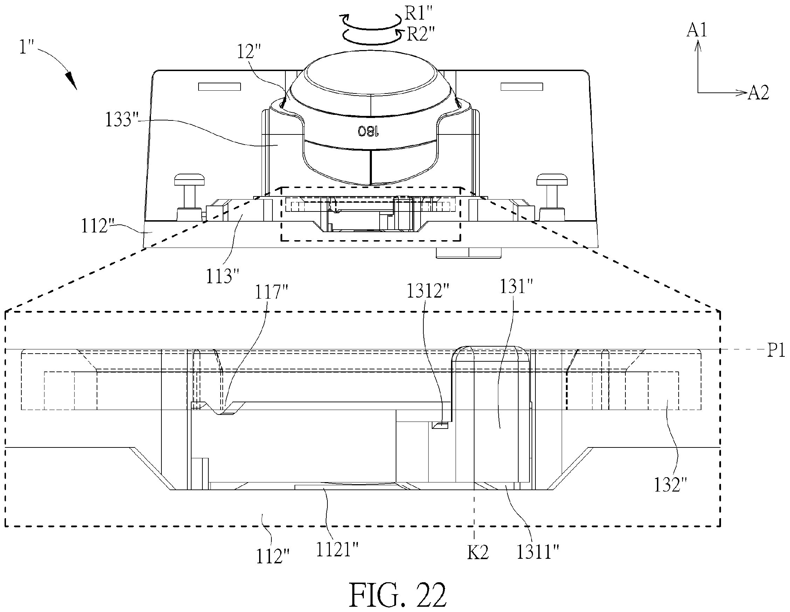

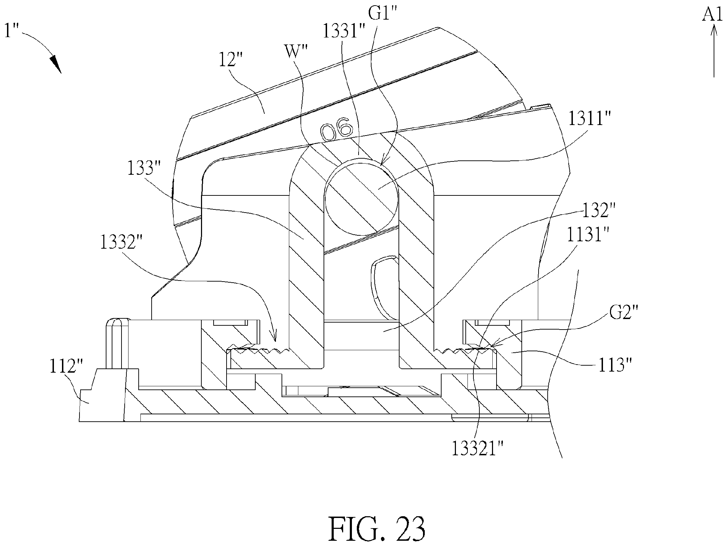

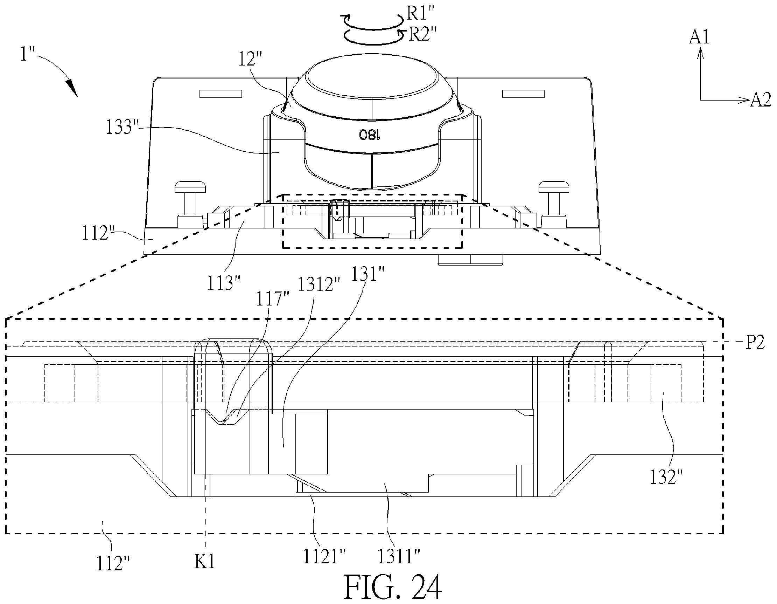

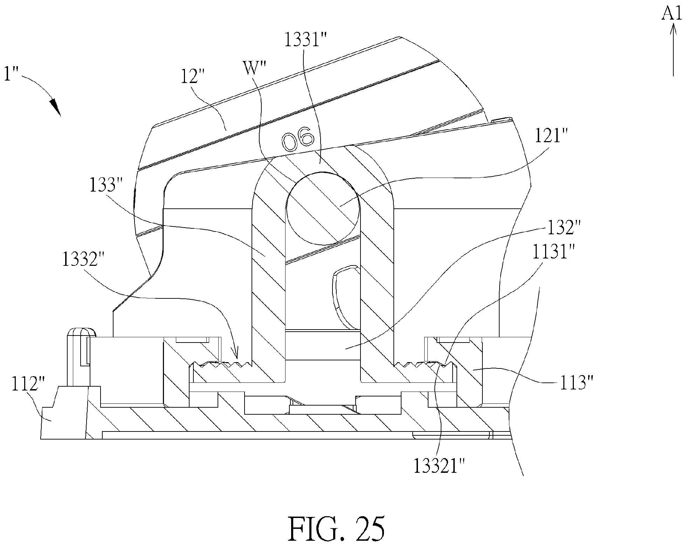

Please refer to FIG. 16 to FIG. 25. FIG. 16 and FIG. 17 are schematic diagrams of a surveillance camera 1" at different views according to a third embodiment of the present invention. FIG. 18 is a partial diagram of the surveillance camera 1" according to the third embodiment of the present invention. FIG. 19 is a partial sectional diagram of the surveillance camera 1" according to the third embodiment of the present invention. FIG. 20 and FIG. 21 are partial exploded diagrams of the surveillance camera 1" according to the third embodiment of the present invention. FIG. 22 is a front view diagram of the surveillance camera 1" with a locking device 13" in a locking state according to the third embodiment of the present invention. FIG. 23 is a lateral view diagram of the surveillance camera 1" with the locking device 13" in the locking state according to the third embodiment of the present invention. FIG. 24 is a front view diagram of the surveillance camera 1" with the locking device 13" in an unlocking state according to the third embodiment of the present invention. FIG. 25 is a lateral view diagram of the surveillance camera 1" with the locking device 13" in the unlocking state according to the third embodiment of the present invention. As shown in FIG. 16 to FIG. 25, different from the first embodiment, in this embodiment, an image capturing device 12" is partially exposed out of an upper case assembly 111". Furthermore, in this embodiment, at least one driving structure 1311" is formed on an operating component 131", and at least one driving cooperating structure 1121" is formed on a base 112" of a shell body 11". When the operating component 131" moves from the unlocking position K2 to the locking position K1, the operating component 131" is driven to move along the first direction D1 by a cooperation of the driving structure 1311" and the driving cooperating structure 1121" to push a supporting component 132" to move along the first direction D1. For example, the driving structure 1311" and the driving cooperating structure 1121" can be two inclined surface structures protruding toward the base 112" and the operating component 131", respectively, and the driving structure 1311" and the driving cooperating structure 1121" can be configured to abut against each other. Furthermore, there is no guiding structure formed on the shell body 11" and no guiding cooperating structure formed on the supporting component 132". Besides, in this embodiment, an engaging cooperating structure 1331" and an engaging structure 121" can be an elongated slot structure extending along the first direction D1 and an engaging lug structure movably passing through the elongated slot structure, respectively, and there is no positioning block formed on the engaging structure 121". Additionally, in this embodiment, an auxiliary component 113" can be an engaging ring configured to at least partially cover a bracket 133" and for allowing the operating component 131" to pass therethrough. Specifically, an abutting structure 13321" and an abutting cooperating structure 1131" can be two engaging teeth surfaces facing toward each other. A positioning structure 117" can be a positioning protrusion formed on the auxiliary component 113" of the shell body 11" and configured to engage with a positioning recessed portion 1312" on the operating component 131". A first stopping structure 115" and a second stopping structure 116" are two blocking walls of the auxiliary component 113" and configured to block the operating component 131".

As shown in FIG. 22 to FIG. 25, when the operating component 131" is operated by a user to rotate from the unlocking position K2 (as shown in FIG. 22 and FIG. 23) to the locking position K1 (as shown in FIG. 24 and FIG. 25) around the first axis A1 along another first rotating direction R1", e.g., the clockwise direction, the driving structure 1311" abuts against the abutting cooperating structure 1131" for driving the operating component 131" to move along the first direction D1, e.g., the upward direction, to push the supporting component 132" to move from the first predetermined position P1 (as shown in FIG. 22 and FIG .23) to the second predetermined position P2 (as shown in FIG. 24 and FIG. 25). When the supporting component 132" moves from the first predetermined position P1 (as shown in FIG. 22 and FIG .23) to the second predetermined position P2 (as shown in FIG. 24 and FIG. 25), the supporting component 132" drives the image capturing device 12" to move along the first direction D1, such that the engaging structure 121" of the image capturing device 12" pushes a wall W" of the engaging cooperating structure 1331" of the bracket 133" to drive the bracket 133" to move along the first direction D1 to drive the engaging structure 121" of the image capturing device 12" and the abutting structure 13321" of the bracket 133" to tightly attach on the wall W" of the engaging cooperating structure 1331" of the bracket 133" and the abutting cooperating structure 1131" of the auxiliary component 113", respectively, to achieve the tight-fitting engagement of the engaging structure 121" and the engaging cooperating structure 1331" and the tight-fitting engagement of the abutting structure 13321" and the abutting cooperating structure 1131." In such a way, the orientation of the image capturing device 12" is locked by a frictional force provided between the engaging structure 121" of the image capturing device 12" and the wall W" of the engaging cooperating structure 1331" of the bracket 133" of the locking device 13" and a frictional force provided between the abutting structure 13321" of the bracket 133" of the locking device 13" and the abutting cooperating structure 1131" of the auxiliary component 113" of the shell body 11".

When it is desired to adjust the orientation of the image capturing device 12", the operating component 131" can be operated by the user to rotate from the locking position K1 (as shown in FIG. 24 and FIG. 25) to the unlocking position K2 (as shown in FIG. 22 and FIG. 23) around the first axis A1 along another second rotating direction R2", e.g., the counterclockwise direction, to drive the supporting component 132" to move from the second predetermined position P2 (as shown in FIG. 24 and FIG. 25) to the first predetermined position P1 (as shown in FIG. 22 and FIG. 23) along the second direction D2, e.g., the downward direction, for driving the image capturing device 12" and the bracket 133" to move along the second direction D2 to terminate the tight-fitting engagement of the engaging structure 121" of the image capturing device 12" and the engaging cooperating structure 1331" of the bracket 133" and the tight-fitting engagement of the abutting structure 13321" of the bracket 133" and the abutting cooperating structure 1131" of the auxiliary component 113", e.g., by separating the engaging structure 121" from the wall W" of the engaging cooperating structure 1331" by a first distance G1" and separating the abutting structure 13321" from the abutting cooperating structure 1131" by a second distance G2". In such a way, the orientation of the image capturing device 12" is unlocked and can be adjusted by a rotating movement of the bracket 133" relative to the base 112" around the first axis A1 and/or a rotating movement of the image capturing device 12" relative to the bracket 133" around the second axis A2.

It should be noticed that the terminating mechanism of the tight-fitting engagement is not limited to the aforementioned embodiments. For example, in another embodiment, when a tight-fitting engagement of two structures is terminated, the two structures can remain in contact with each other rather than being separated from each other, i.e., there is no gap formed between these two structures.

Furthermore, understandably, in another embodiment, the bracket can be fixedly disposed on the shell body, such that the orientation of the image capturing device can be adjusted by a rotating movement of the image capturing device around the second axis only.

In contrast to the prior art, the present invention allows a user to unlock the orientation of the image capturing device by operating the operating component from the locking position to the unlocking position for an adjustment of a shooting angle of the surveillance camera, and the present invention allows the user to lock the orientation of the image capturing device by operating the operating component from the unlocking position to the locking position after the adjustment of the shooting angle of the surveillance camera. The aforementioned operation is tool-free. Therefore, the present invention not only simplifies usage but also enhances user experience.

## Claims

1. A surveillance camera (1, 1', 1") comprising:
a shell body (11, 11', 11");
**characterized in that** the surveillance camera (1, 1', 1") further comprises:
an image capturing device (12, 12") at least partially disposed inside the shell body (11, 11', 11"), the image capturing device (12, 12") being movable at least along a first direction (D1) or a second direction (D2) opposite to the first direction (D1); and
a locking device (13, 13") disposed between the shell body (11, 11', 11") and the image capturing device (12, 12");
wherein the locking device (13, 13") comprises an operating component (131, 131', 131") rotatably disposed between the shell body (11, 11', 11") and the image capturing device (12, 12") and switchable between a locking position (K1) and unlocking position (K2), and when the operating component (131, 131', 131") moves from the locking position (K1) to the locking position (K1), the image capturing device (12, 12") moves along a first direction (D1), such that the image capturing device (12, 12") and the locking device (13, 13") engage with the locking device (13, 13") and the shell body (11, 11', 11") in tight-fitting engagements, respectively, thereby locking an orientation of the image capturing device (12, 12").

2. The surveillance camera (1, 1', 1") of claim 1, **characterized in that** the first direction (D1) is parallel to an axial direction of a rotating axis of the operating component (131, 131', 131").

3. The surveillance camera (1, 1', 1") of any of claims 1 and 2, **characterized in that** the locking device (13, 13") further comprises a supporting component (132, 132', 132") disposed between the operating component (131, 131', 131") and the image capturing device (12, 12"), and when the operating component (131, 131', 131") moves from the unlocking position (K2) to the locking position (K1), the operating component (131, 131', 131") drives the supporting component (132, 132', 132") to move along the first direction (D1), such that the supporting component (132, 132', 132") drives the image capturing device (12, 12") to move along the first direction (D1).

4. The surveillance camera (1, 1') of claim 3, **characterized in that** at least one driving structure (1311, 1311') is formed on the operating component (131, 131'), at least one driving cooperating structure (1321, 1321') is formed on the supporting component (132, 132'), and when the operating component (131, 131') moves from the unlocking position (K2) to the locking position (K1), the operating component (131, 131') drives the supporting component (132, 132') to move along the first direction (D1) by a cooperation of the at least one driving structure (1311, 1311') and the at least one driving cooperating structure (1321, 1321').

5. The surveillance camera (1") of claim 3, **characterized in that** at least one driving structure (1311") is formed on the operating component (131"), at least one driving cooperating structure (1321") is formed on the shell body (11"), and when the operating component (131") moves from the unlocking position (K2) to the locking position (K1), the operating component (131") is driven to move along the first direction (D1) by a cooperation of the at least one driving structure (1311") and the at least one driving cooperating structure (1321") to push the supporting component (132") to move along the first direction (D1).

6. The surveillance camera (1, 1', 1") of any of claims 3 to 5, **characterized in that** at least one guiding structure (114) is formed on the shell body (11, 11', 11"), at least one guiding cooperating structure (1322) is formed on the supporting component (132, 132', 132"), the supporting component (132, 132', 132") is guided to move along the first direction (D1) by a sliding cooperation of the at least one guiding structure (114) and the at least one guiding cooperating structure (1322).

7. The surveillance camera (1, 1', 1") of any of claims 1 to 5, **characterized in that** the locking device (13, 13") further comprises a bracket (133, 133") at least partially covering the image capturing device (12, 12"), and the image capturing device (12, 12") pushes the bracket (133, 133") to move along the first direction (D1) when the image capturing device (12, 12") moves along the first direction (D1).

8. The surveillance camera (1, 1', 1") of claim 7, **characterized in that** the image capturing device (12, 12") comprises at least one engaging structure (121, 121"), the bracket (133, 133") comprises at least one engaging cooperating structure (1331, 1331 "), and when the image capturing device (12, 12") moves along the first direction (D1), the at least one engaging structure (121, 121") pushes the at least one engaging cooperating structure (1331, 1331") to drive the bracket (133, 133") to move along the first direction (D1).

9. The surveillance camera (1, 1', 1") of claim 8, **characterized in that** when the operating component (131, 131', 131") moves from the unlocking position (K2) to the locking position (K1), the image capturing device (12, 12") moves along the first direction (D1) to drive the at least one engaging structure (121, 121") to engage with the at least one engaging cooperating structure (1331, 1331") in a tight-fitting engagement, and when the operating component (131, 131', 131") moves from the locking position (K1) to the unlocking position (K2), the image capturing device (12, 12") moves along the second direction (D2) to terminate the tight-fitting engagement of the at least one engaging structure (121, 121") and the at least one engaging cooperating structure (1331, 1331").

10. The surveillance camera (1, 1', 1") of any of claims 7 to 9, **characterized in that** the shell body (11, 11', 11") comprises a base (112, 112', 112") and at least one auxiliary component (113, 113") disposed on the base (112, 112', 112"), the bracket (133, 133") comprises a moving portion (1332) movably disposed between the base (112, 112', 112") and the at least one auxiliary component (113, 113"), and when the operating component (131, 131', 131") moves from the unlocking position (K2) to the locking position (K1), the moving portion (1332) of the bracket (133, 133") moves along the first direction (D1), such that the moving portion (1332) of the bracket (133, 133") is engaged with the at least one auxiliary component (113, 113 ") in a tight-fitting engagement.

11. The surveillance camera (1, 1', 1") of claim 10, **characterized in that** an abutting structure (13321 ,13321") is formed on the moving portion (1332) of the bracket (133, 133"), an abutting cooperating structure (1131,1131") is formed on the at least one auxiliary component (113, 113"), and when the operating component (131, 131', 131") moves from the unlocking position (K2) to the locking position (K1), the moving portion (1332) of the bracket (133, 133") moves along the first direction (D1), such that the abutting structure (13321 ,13321") is engaged with the abutting cooperating structure (1131,1131") in a tight-fitting engagement.

12. The surveillance camera (1, 1', 1") of claim 11, **characterized in that** when the operating component (131, 131', 131") moves from the locking position (K1) to the unlocking position (K2), the moving portion (1332) of the bracket (133, 133") moves along the second direction (D2), so as to terminate the tight-fitting engagement of the abutting structure (13321 ,13321") and the abutting cooperating structure (1131,1131").

13. The surveillance camera (1, 1', 1") of any of claims 1 to 12, **characterized in that** when the operating component (131, 131', 131") moves from the locking position (K1) to the unlocking position (K2), the image capturing device (12, 12") moves along the second direction (D2), so as to terminate the tight-fitting engagement of the image capturing device (12, 12") and the locking device (13, 13") and the tight-fitting engagement of the locking device (13, 13") and the shell body (11, 11', 11").

14. The surveillance camera (1, 1', 1") of any of claims 1 to 13, **characterized in that** a positioning structure (117, 117") is formed on the shell body (11, 11', 11") and configured to position the operating component (131, 131', 131") at the locking position (K1) when the operating component (131, 131', 131") moves from the unlocking position (K2) to the locking position (K1).

15. The surveillance camera (1, 1', 1") of any of claims 1 to 14, **characterized in that** at least one blocking structure (115, 115", 116, 116", 118') is formed on the shell body (11, 11', 11") and configured to stop the operating component (131, 131', 131") at the unlocking position (K2) or the locking position (K1).

## Amended claims

### Amended claims in accordance with Rule 137(2) EPC.

1. A surveillance camera (1, 1', 1") comprising:
a shell body (11, 11', 11");
an image capturing device (12, 12") at least partially disposed inside the shell body (11, 11', 11"), the image capturing device (12, 12") being movable at least along a first direction (D1) or a second direction (D2) opposite to the first direction (D1); and
a locking device (13, 13") disposed between the shell body (11, 11', 11") and the image capturing device (12, 12");
wherein the locking device (13, 13") comprises an operating component (131, 131', 131") rotatably disposed between the shell body (11, 11', 11") and the image capturing device (12, 12") and switchable between a locking position (K1) and unlocking position (K2);
**characterized in that**:
when the operating component (131, 131', 131") moves from the unlocking position (K2) to the locking position (K1), the image capturing device (12, 12") moves along a first direction (D1), such that the image capturing device (12, 12") and the locking device (13, 13") engage with the locking device (13, 13") and the shell body (11, 11', 11") in tight-fitting engagements, respectively, thereby locking an orientation of the image capturing device (12, 12");
the first direction (D1) is parallel to an axial direction of a rotating axis of the operating component (131, 131', 131").

2. The surveillance camera (1, 1', 1") of claim 1, **characterized in that** the locking device (13, 13") further comprises a supporting component (132, 132', 132") disposed between the operating component (131, 131', 131") and the image capturing device (12, 12"), and when the operating component (131, 131', 131") moves from the unlocking position (K2) to the locking position (K1), the operating component (131, 131', 131") drives the supporting component (132, 132', 132") to move along the first direction (D1), such that the supporting component (132, 132', 132") drives the image capturing device (12, 12") to move along the first direction (D1).

3. The surveillance camera (1, 1') of claim 2, **characterized in that** at least one driving structure (1311, 1311') is formed on the operating component (131, 131'), at least one driving cooperating structure (1321, 1321') is formed on the supporting component (132, 132'), and when the operating component (131, 131') moves from the unlocking position (K2) to the locking position (K1), the operating component (131, 131') drives the supporting component (132, 132') to move along the first direction (D1) by a cooperation of the at least one driving structure (1311, 1311') and the at least one driving cooperating structure (1321, 1321').

4. The surveillance camera (1") of claim 2, **characterized in that** at least one driving structure (1311") is formed on the operating component (131"), at least one driving cooperating structure (1321") is formed on the shell body (11"), and when the operating component (131") moves from the unlocking position (K2) to the locking position (K1), the operating component (131") is driven to move along the first direction (D1) by a cooperation of the at least one driving structure (1311") and the at least one driving cooperating structure (1321") to push the supporting component (132") to move along the first direction (D1).

5. The surveillance camera (1, 1', 1") of any of claims 2 to 4, **characterized in that** at least one guiding structure (114) is formed on the shell body (11, 11', 11"), at least one guiding cooperating structure (1322) is formed on the supporting component (132, 132', 132"), the supporting component (132, 132', 132") is guided to move along the first direction (D1) by a sliding cooperation of the at least one guiding structure (114) and the at least one guiding cooperating structure (1322).

6. The surveillance camera (1, 1', 1") of any of claims 1 to 4, **characterized in that** the locking device (13, 13") further comprises a bracket (133, 133") at least partially covering the image capturing device (12, 12"), and the image capturing device (12, 12") pushes the bracket (133, 133") to move along the first direction (D1) when the image capturing device (12, 12") moves along the first direction (D1).

7. The surveillance camera (1, 1', 1") of claim 6, **characterized in that** the image capturing device (12, 12") comprises at least one engaging structure (121, 121"), the bracket (133, 133") comprises at least one engaging cooperating structure (1331, 1331"), and when the image capturing device (12, 12") moves along the first direction (D1), the at least one engaging structure (121, 121") pushes the at least one engaging cooperating structure (1331, 1331") to drive the bracket (133, 133") to move along the first direction (D1).

8. The surveillance camera (1, 1', 1") of claim 7, **characterized in that** when the operating component (131, 131', 131") moves from the unlocking position (K2) to the locking position (K1), the image capturing device (12, 12") moves along the first direction (D1) to drive the at least one engaging structure (121, 121") to engage with the at least one engaging cooperating structure (1331, 1331") in a tight-fitting engagement, and when the operating component (131, 131', 131") moves from the locking position (K1) to the unlocking position (K2), the image capturing device (12, 12") moves along the second direction (D2) to terminate the tight-fitting engagement of the at least one engaging structure (121, 121") and the at least one engaging cooperating structure (1331, 1331").

9. The surveillance camera (1, 1', 1") of any of claims 6 to 8, **characterized in that** the shell body (11, 11', 11") comprises a base (112, 112', 112") and at least one auxiliary component (113, 113") disposed on the base (112, 112', 112"), the bracket (133, 133") comprises a moving portion (1332) movably disposed between the base (112, 112', 112") and the at least one auxiliary component (113, 113"), and when the operating component (131, 131', 131") moves from the unlocking position (K2) to the locking position (K1), the moving portion (1332) of the bracket (133, 133") moves along the first direction (D1), such that the moving portion (1332) of the bracket (133, 133") is engaged with the at least one auxiliary component (113, 113") in a tight-fitting engagement.

10. The surveillance camera (1, 1', 1") of claim 9, **characterized in that** an abutting structure (13321 ,13321") is formed on the moving portion (1332) of the bracket (133, 133"), an abutting cooperating structure (1131,1131") is formed on the at least one auxiliary component (113, 113"), and when the operating component (131, 131', 131") moves from the unlocking position (K2) to the locking position (K1), the moving portion (1332) of the bracket (133, 133") moves along the first direction (D1), such that the abutting structure (13321 ,13321") is engaged with the abutting cooperating structure (1131,1131") in a tight-fitting engagement.

11. The surveillance camera (1, 1', 1") of claim 10, **characterized in that** when the operating component (131, 131', 131") moves from the locking position (K1) to the unlocking position (K2), the moving portion (1332) of the bracket (133, 133") moves along the second direction (D2), so as to terminate the tight-fitting engagement of the abutting structure (13321 ,13321") and the abutting cooperating structure (1131,1131").

12. The surveillance camera (1, 1', 1") of any of claims 1 to 11, **characterized in that** when the operating component (131, 131', 131") moves from the locking position (K1) to the unlocking position (K2), the image capturing device (12, 12") moves along the second direction (D2), so as to terminate the tight-fitting engagement of the image capturing device (12, 12") and the locking device (13, 13") and the tight-fitting engagement of the locking device (13, 13") and the shell body (11, 11', 11").

13. The surveillance camera (1, 1', 1") of any of claims 1 to 12, **characterized in that** a positioning structure (117, 117") is formed on the shell body (11, 11', 11") and configured to position the operating component (131, 131', 131") at the locking position (K1) when the operating component (131, 131', 131") moves from the unlocking position (K2) to the locking position (K1).

14. The surveillance camera (1, 1', 1") of any of claims 1 to 13, **characterized in that** at least one blocking structure (115, 115", 116, 116", 118') is formed on the shell body (11, 11', 11") and configured to stop the operating component (131, 131', 131") at the unlocking position (K2) or the locking position (K1).
